# EUROPEAN PATENT SPECIFICATION

(11) **EP 1 737 908 B1**
(45) Date of publication and mention of the grant of the patent: **19.03.2008**
(21) Application number: 04724017.1
(22) Date of filing: 29.03.2004
(51) Int. Cl.: C08L 21/00, C08L 17/00, C08L 25/10, C08L 53/02, C08K 5/09, C08F 8/46, C08C 19/00

(54) **THERMOPLASTIC ELASTOMERIC MATERIAL COMPRISING A VULCANIZED RUBBER IN A SUBDIVIDED FORM**
THERMOPLASTISCHES ELASTOMER ENTHALTEND IN VERTEILTER FORM VULKANISIERTEN KAUTSCHUK
MATERIAU A BASE D'ELASTOMERE THERMOPLASTIQUE COMPORTANT UN CAOUTCHOUC VULCANISE EN UNE FORME SUBDIVISEE

(43) Date of publication of application: 03.01.2007
(73) Proprietor: Pirelli & C. S.p.A., 20123 Milano (IT)
(72) Inventor: RESMINI, Emiliano, Pirelli Labs S.p.A., I-20126 Milano (IT); TIRELLI, Diego, Pirelli Labs S.p.A., I-20126 Milano (IT); GALBUSERA, Michele, Pirelli Labs S.p.A., I-20126 Milano (IT)
(74) Representative: Bottero, Claudio
(86) International application number: PCT/EP2004/003302
(87) International publication number: WO 2005/097887

(56) References cited:
- EP-A- 0 435 173
- EP-A- 1 380 618
- DE-A- 19 607 281
- US-A- 4 197 377
- US-A- 4 248 758
- US-A- 4 386 182
- US-A- 4 410 656
- US-B1- 6 218 470
- US-B1- 6 262 175

## Description

### Background of the invention

The present invention relates to a thermoplastic elastomeric material comprising a vulcanized rubber in a subdivided form.

In particular, the present invention relates to a thermoplastic elastomeric material comprising a vulcanized rubber in a subdivided form and at least one styrene-based thermoplastic elastomer.

The present invention moreover relates to a manufactured product comprising said thermoplastic elastomeric material.

### Prior art

The increased production of industrial rubber products has resulted in the accumulation of large amounts of rubber wastes which are generally disposed in dedicated landfills with the main drawbacks of environment pollution as well as of the need for large dedicated areas for storing said wastes.

It is known in the art to depolymerize waste rubber, such as tires, in an effort to reduce the volume of waste and obtain a useful byproduct. Likewise, rubber products may be devulcanized in an attempt to recycle the waste rubber.

In addition to these techniques, it is common in the art to grind the waste rubber and utilize the ground particles so obtained. These ground particles may then be compounded with thermoplastic polymeric materials in order to make final products which may be employed in a plurality of applications.

For example, patent US 4,970,043 relates to a process for forming a stable moldable product from scrap material comprising reground rubber and a cohesive base material comprising a thermoplastic polymer such as, for example, a butadiene-styrene block copolymer. A substantially uniformly distributed mixture of the reground rubber and the cohesive base material in a ratio 1:1 is processed under sufficient pressure and temperature to form a semi-stable moldable product. The semi-stable moldable product is then subjected or maintained under sufficient pressure to form a stable moldable product. The obtained stable molded product is said to have reduced porosity and generally uniform properties.

Patent US 5,514,721 relates to a method for making a reprocessable thermoplastic composition containing a thermoplastic material and vulcanized rubber particles, said method comprising the steps of first melting a thermoplastic material to form a heated mass; adding to said heated mass a deflocculant and an emulsifier for vulcanized rubber particles, said deflocculant being selected from the group consisting of organic and inorganic acid and base deflocculants; adding vulcanized rubber particles to said mass; heating and mixing the resultant mass under high shear forces sufficiently to reduce the particles size of the rubber particles while emulsifying and swelling the surfaces of the same; neutralizing the mixture to its isoelectric point; and cooling and recovering the resultant mass. The thermoplastic material may be selected from thermoplastic elastomers (for example, a styrene block copolymer such as styrene-isoprene. or styrene-butadiene block copolymers). The obtained thermoplastic composition can be formulated to have properties comparable to, or better than, vulcanized rubbers and to have excellent chemical and weathering resistance.

Patent US 6,262,175 relates to a thermoplastic composition containing, in percentages by weight based on the total weight of the composition: about 5% to about 90% of vulcanized rubber crumb; about 5% to about 60% polyolefin; about 2% to about 30% uncured rubber or styrene-based thermoplastic elastomer; and about 2% to about 30% vinyl polymer selected from vinyl homopolymers, copolymers and mixtures thereof. The polyolefin is a solid, high molecular weight polyolefin homopolymer or copolymer, or mixtures thereof. Preferred polyolefin are polyethylene, polypropylene, or a copolymer of ethylene and propylene. The styrene-based thermoplastic elastomer may be selected from styrene-butadiene-styrene block copolymers. The abovementioned thermoplastic composition is said to have excellent physical properties, including excellent ultimate elongation and tear strength.

However, the Applicant noticed that the addition of ground vulcanized rubber particles to styrene-based thermoplastic elastomers such as, for example, styrene block copolymers, results in a significant deterioration of the mechanical properties of the resulting thermoplastic elastomeric material.

In particular, the Applicant noticed that the scarce compatibility between the styrene-based thermoplastic elastomers and the ground vulcanized rubber particles negatively affects the mechanical properties, in particular stress at break and elongation at break, and the abrasion resistance of the obtained thermoplastic elastomeric materials.

### Summary of the invention

The Applicant has now found that it is possible to overcome the above mentioned problems utilizing at least one coupling agent having at least one ethylenic unsaturation. Said coupling agent improves the compatibility between the styrene-based thermoplastic elastomers and the ground vulcanized rubber particles and allows to obtain a thermoplastic elastomeric material having good mechanical properties, in particular stress at break and elongation at break. Moreover, said thermoplastic elastomeric material shows an improved abrasion resistance. Furthermore, said thermoplastic elastomeric material shows good flexural strength and good tear resistance. Moreover, the Melt Flow Index (MFI) of said thermoplastic elastomeric material is not negatively affected.

According to a first aspect, the present invention relates to a thermoplastic elastomeric material comprising:
(a) from 10% by weight to 100% by weight, preferably from 20% by weight to 80% by weight, of at least one styrene-based thermoplastic elastomer;
(b) from 0% by weight to 90% by weight, preferably from 20% by weight to 80% by weight, of at least one thermoplastic α-olefin homopolymer or copolymer different from (a);
   the amount of (a) + (b) being 100;
(c) from 2 parts by weight to 90 parts by weight, preferably from 5 parts by weight to 40 parts by weight, of a vulcanized rubber in a subdivided form;
(d) from 0.01 parts by weight to 10 parts by weight, preferably from 0.05 parts by weight to 5 parts by weight, of at least one coupling agent containing at least one ethylenic unsaturation;
   the amounts of (c) and (d) being expressed with respect to 100 parts by weight of (a) + (b).
   According to one preferred embodiment, said thermoplastic elastomeric material may further comprise (e) at least one aromatic monocarboxylic or dicarboxylic acid or a derivative thereof.
   According to a further preferred embodiment, said thermoplastic elastomeric material may further comprise (f) at least one inorganic filler.
   According to a further preferred embodiment, said thermoplastic elastomeric material may further comprise (g) at least one syndiotactic 1,2-polybutadiene.
   According to one preferred embodiment, the styrene-based thermoplastic elastomer (a) comprises at least two terminal poly(monovinylaromatic hydrocarbon) blocks and at least one internal poly(conjugated diene) block and/or poly(aliphatic α-olefin) block.
   Preferably, the styrene-based thermoplastic elastomer (a) may be selected, for example, from block copolymers having the following formulae: A(BA)ₘ, or A(BA')_{m'}, or (AB)ₙX, or (AB)ₚX(A'B')_{q} or (AB)ᵣX(B'')ₛ, wherein each of A and A' independently represent a polymer block comprising a monovinilydene aromatic monomer; B, B' and B" independently represent a polymer block comprising a conjugated diene monomer and/or an aliphatic α-olefin monomer; X represents a polyfunctional bridging moiety; n and r represent an integer not lower than 2, preferably from 2 to 20 inclusive, more preferably from 2 to 8 inclusive; m and m' represent an integer ≥ 1, preferably from 1 to 20 inclusive, more preferably from 1 to 8 inclusive; p, q and s represent an integer ≥ 1, preferably from 1 to 20 inclusive, more preferably from 1 to 8 inclusive.
   Preferably, the monovinylidene aromatic monomer of blocks A and A' may be selected, for example, from: styrene, alkyl-substituted styrenes, alkoxy-substituted styrenes, vinyl naphthalene, alkyl-substituted vinyl naphthalene, vinyl xylene, alkyl-substituted vinyl xylene, or mixtures thereof. Styrene or alkyl-substituted styrene are preferred, styrene is more preferred.
   The alkyl or alkoxy substituents may generally comprise from 1 to 6 carbon atoms, preferably from 1 to 4 carbon atoms. The number of alkyl or alkoxy substituents per molecule, if present, may range from 1 to 3, and is preferably 1. Comonomers, if present, may be selected from (di)olefins and other compounds copolymerizable with styrene.

Preferably, the conjugated diene monomer of blocks B, B' and B", may be selected, for example, from conjugated dienes containing from 4 to 24, preferably from 3 to 12, more preferably from 4 to 6, carbon atoms, such as, for example, 1,3-butadiene, isoprene, 2-ethyl-1,3-butadiene, 2,3-dimethyl-1,3-butadiene, 2-phenyl-1,3-butadiene, 1,3-pentadiene, methylpentadiene, 3-ethyl-1,3-pentadiene, 2,4-hexadiene, 3,4-dimethyl-1,3-hexadiene, 4,5-diethyl-1,3-octadiene, piperylene, or mixtures thereof. 1,3-Butadiene and isoprene are preferred. Comonomers, if present, may be selected from vinylaromatic monomers and other compounds copolymerizable with the conjugated diene monomers.

Preferably, the aliphatic α-olefin monomer may contain from 2 to 12, more preferably from 2 to 4, carbon atoms and may be selected, for example, from: ethylene, propylene, or mixture thereof.

Preferably, the A and A' blocks represent poly(styrene) blocks and B, B' and B" blocks represent poly(butadiene) blocks, poly(isoprene) blocks, polybutylene/polyethylene copolymer blocks, polyethylene/polypropylene copolymer blocks, or isoprene/butadiene copolymer blocks.

Polyfunctional bridging moieties which may be used comprise those commonly known in the art.

Examples of suitable polyfunctional bridging moieties which may be advantageously used in said block copolymers comprises from 2 to 8, preferably from 2 to 6, more preferably 2, 3 or 4, functional groups.

Said blocks copolymers may be made by anionic polymerization with an alkali metal initiator such as s-butyllithium as disclosed, for example, in patents US 4,764,572, US 3,231,635, US 3,700,633 and US 5,194,530.

Said block copolymers may also be selectively hydrogenated, usually to a residual ethylenic unsaturation of at most 20%, more preferably at most 5%, still more preferably at most 2% of its original unsaturation content prior to hydrogenation. Hydrogenation may be carried out as disclosed, for example, in US Patent Reissue 27,145 or in patents US 5,039,755, US 5,299,464 and US 3,595,942.

Preferably, blocks A and A' have a weight average molecular weight in the range of from 3,000 g/mol to 125,000 g/mol, more preferably from 5,000 g/mol to 60,000 g/mol.

Preferably, the blocks B, B' and B", have a weight average molecular weight in the range of from 10,000 g/mol to 300,000 g/mol, more preferably in the range of from 30,000 g/mol to 150,000 g/mol.

The total weight average molecular weight of the block copolymer is preferably in the range of from 25,000 to 500,000, more preferably from 35,000 to 400,000.

The weight average molecular weight may be determined by methods known in the art such as, for example, by gel permeation chromatography (GPC) using polystyrene calibration standards according to ASTM standard D3536-91.

The amount of the monovinylidene aromatic blocks is generally of from 8% by weight to 75% by weight, preferably from 20% by weight to 60% by weight, with respect to the total weight of the block copolymer. Preferably, the block copolymer contains from 25% by weight to 92% by weight, more preferably from 40% by weight to 80% of conjugated diene block and/or of aliphatic α-olefin block, with respect to the total weight of the block copolymer.

Said block copolymer have a triblock structure and may be of the linear or radial type, or any combination thereof.

Preferably, the styrene-based thermoplastic elastomer (a) may be selected, for example, from the following triblock copolymers: styrene-butadiene-styrene (S-B-S), styrene-isoprene-styrene (S-I-S), styrene-ethylene/butene-styrene (S-EB-S), or mixtures thereof.

Examples of styrene-based thermoplastic elastomer (a) which may be used in the present invention and which are currently commercially available are the products Kraton^{®} (Shell Chemical), Calprene^{®} (Repsol); Europrene^{®} (Polimeri Europa); Vector^{®} (Dexco).

With regard to the thermoplastic α-olefin homopolymer or copolymer (b), different from (a), the term "α-olefin" generally means an aliphatic or aromatic α-olefin of formula CH₂=CH-R, wherein R represents a hydrogen atom, a linear or branched alkyl group containing from 1 to 12 carbon atoms, an aryl group having from 6 to 14 carbon atoms.

Preferably, the aliphatic α-olefin may be selected, for example, from: ethylene, propylene, 1-butene, isoprene, isobutylene, 1-pentene, 1-hexene, 3-methyl-1-butene, 3-methyl-1-pentene, 4-methyl-1-pentene, 4-methyl-1-hexene, 4,4-dimethyl-1-hexene, 4,4-dimethyl-1-pentene, 4-ethyl-1-hexene, 3-ethyl-1-hexene, 1-octene, 1-decene, 1-dodecene, 1-tetradecene, 1-hexadecene, 1-octadecene, 1-eicosene, or mixture thereof. Of these, preferred are ethylene, propylene, 1-butene, 1-hexene, 1-octene, or mixtures thereof.

Preferably, the aromatic α-olefin may be selected, for example, from: styrene, α-methylstyrene, or mixture thereof.

Preferably, the thermoplastic α-olefin homopolymer or copolymer (b) which may be used in the present invention may be selected, for example, from:
- propylene homopolymers or copolymer of propylene with ethylene and/or at least one α-olefin having from 4 to 12 carbon atoms with an overall content of ethylene and/or α-olefin lower than 10% by mole;
- ethylene homopolymers or copolymers of ethylene with at least one α-olefin having from 4 to 12 carbon atoms and, optionally, at least one polyene;
- styrene polymers such as, for example, styrene homopolymers; copolymers of styrene with at least one C₁-C₄ alkyl-styrene or with at least one natural or synthetic elastomer such as, for example, polybutadiene, polyisoprene, butyl rubber, ethylene/propylene/diene copolymer (EPDM), ethylene/propylene copolymers (EPR), natural rubber, epichlorohydrin;
- copolymers of ethylene with at least one ethylenically unsaturated ester selected from: alkyl acrylates, alkyl methacrylates and vinyl carboxylate, wherein the alkyl group, linear or branched, may have from 1 to 8, preferably from 1 to 4, carbon atoms, while the carboxylate group, linear or branched, may have from 2 to 8, preferably from 2 to 5, carbon atoms; and wherein the ethylenically unsaturated ester is generally present in an amount of from 0.1% to 80% by weight, preferably from 0.5% to 50% by weight, with respect to the total weight of the copolymer.

Examples of ethylene homopolymers or copolymers of ethylene with at least one α-olefin having from 4 to 12 carbon atoms which may be used in the present invention as thermoplastic α-olefin homopolymer or copolymer (b) are: low density polyethylene (LDPE), medium density polyethylene (MDPE), high density polyethylene (HDPE), linear low density polyethylene (LLDPE), ultra-low density polyethylene (ULDPE), or mixtures thereof.

Preferably, the copolymers of ethylene with at least one α-olefin having from 4 to 12 carbon atoms may be selected, for example, from:
- elastomeric copolymers having the following monomer composition: 35 mol%-90 mol% of ethylene; 10 mol%-65 mol% of an aliphatic α-olefin, preferably propylene; 0 mol%-10 mol% of a polyene, preferably a diene, more preferably, 1,4-hexadiene or 5-ethylene-2-norbornene (for example, EPR and EPDM rubbers);
- copolymers having the following monomer composition: 75 mol%-97 mol%, preferably 90 mol%-95 mol%, of ethylene; 3 mol%-25 mol%, preferably 5 mol%-10 mol%, of an aliphatic α-olefin; 0 mol%-5 mol%, preferably 0 mol%-2 mol%, of a polyene, preferably a diene (for example, ethylene/1-octene copolymers, such as the products Engage^{®} of DuPont-Dow Elastomers).

Examples of styrene polymers, different from (a), which may be used in the present invention are: syndiotactic polystyrene, atactic polystyrene, isotactic polystyrene, styrene-methylstyrene copolymer, styrene-isoprene copolymer or styrene-butadiene copolymer, styrene-ethylene/propylene (S-EP) or styrene-ethylene/butene (S-EB) diblock copolymers; styrene-butadiene or styrene-isoprene branched copolymers; or mixtures thereof.

With regard to the copolymers of ethylene with at least one ethylenically unsaturated ester, examples of acrylates or methacrylates are: ethyl acrylate, methyl acrylate, methyl methacrylate., t-butyl acrylate, n-butyl acrylate, n-butyl methacrylate, 2-ethylhexyl acrylate, or mixtures thereof. Examples of vinyl carboxylates are: vinyl acetate, vinyl propionate, vinyl butanoate, or mixtures thereof.

Examples of copolymers of ethylene with at least one ethylenically unsaturated ester which may be used in the present invention are: ethylene/vinylacetate copolymer (EVA), ethylene/ethylacrylate copolymer (EEA), ethylene/butylacrylate copolymer (EBA), or mixtures thereof.

Said thermoplastic α-olefin homopolymer or copolymer (b) may be recovered from a waste material such as, for example, from industrial wastes, from used agricultural films, from used bottles or containers.

The vulcanized rubber in a subdivided form (c) which may be used in the present invention may be obtained by grinding or otherwise comminuting any source of vulcanized rubber compound such as, for example, tires, roofing membranes, hoses, gaskets, and the like, and is preferably obtained from reclaimed or scrap tires using any conventional method. For example, the vulcanized rubber in a subdivided form may be obtained by mechanical grinding at ambient temperature or in the presence of a cryogenic coolant (i.e. liquid nitrogen). Any steel or other metallic inclusions should be removed from the ground tires before use. Usually, fibrous material such as, for example, tire cord fibers, is preferably removed from the ground rubber using conventional separation methods.

According to one preferred embodiment, the vulcanized rubber in a subdivided form (c) which may be used in the present invention, is in the form of powder or granules having a particle size not higher than 10 mm, preferably not higher than 5 mm.

According to a more preferred embodiment, the vulcanized rubber in a subdivided form (c) which may be used in the present invention, has a particle size not higher than 0.5 mm, preferably not higher than 0.2 mm, more preferably not higher than 0.1 mm.

According to one preferred embodiment, the vulcanized rubber in a subdivided form (c) may comprise at least one crosslinked diene elastomeric polymer or copolymer which may be of natural origin or may be obtained by solution polymerization, emulsion polymerization or gas-phase polymerization of one or more conjugated diolefins, optionally blended with at least one comonomer selected from monovinylarenes and/or polar comonomers in an amount of not more than 60% by weight.

The conjugated diolefins generally contain from 4 to 12, preferably from 4 to 8 carbon atoms, and may be selected, for example, from the group comprising: 1,3-butadiene, isoprene, 2,3-dimethyl-1,3-butadiene, 1,3-pentadiene, 1,3-hexadiene, 3-butyl-1,3-octadiene,- 2-phenyl-1,3-butadiene, or mixtures thereof. Monovinylarenes which may optionally be used as comonomers generally contain from 8 to 20, preferably from 8 to 12 carbon atoms, and may be selected, for example, from: styrene; 1-vinylnaphthalene; 2-vinylnaphthalene; various alkyl, cycloalkyl, aryl, alkylaryl or arylalkyl derivatives of styrene such as, for example, α-methylstyrene, 3-methylstyrene, 4-propylstyrene, 4-cyclohexylstyrene, 4-dodecylstyrene, 2-ethyl-4-benzylstyrene, 4-p-tolylstyrene, 4-(4-phenylbutyl)styrene, or mixtures thereof.

Polar comonomers which may optionally be used may be selected, for example, from: vinylpyridine, vinylquinoline, acrylic acid and alkylacrylic acid esters, nitriles, or mixtures thereof, such as, for example, methyl acrylate, ethyl acrylate, methyl methacrylate, ethyl methacrylate, acrylonitrile, or mixtures thereof.

Preferably, the crosslinked diene elastomeric polymer or copolymer may be selected, for example, from: cis-1,4-polyisoprene (natural or synthetic, preferably natural rubber), 3,4-polyisoprene, polybutadiene (in particular polybutadiene with a high 1,4-cis content), optionally halogenated isoprene/isobutene copolymers, 1,3-butadiene/acrylonitrile copolymers, styrene/1,3-butadiene copolymers, styrene/isoprene/1,3-butadiene copolymers, styrene/1,3-butadiene/acrylonitrile copolymers, or mixtures thereof.

Alternatively, the vulcanized rubber in a subdivided form (c) may further comprise at least one crosslinked elastomeric polymer of one or more monoolefins with an olefinic comonomer or derivatives thereof. The monoolefins may be selected, for example, from: ethylene and α-olefins generally containing from 3 to 12 carbon atoms, such as, for example, propylene, 1-butene, 1-pentene, 1-hexene, 1-octene, or mixtures thereof. The following are preferred: copolymers between ethylene and an α-olefin, optionally with a diene; isobutene homopolymers or copolymers thereof with small amounts of a diene, which are optionally at least partially halogenated. The diene optionally present generally contains from 4 to 20 carbon atoms and is preferably selected from: 1,3-butadiene, isoprene, 1,4-hexadiene, 1,4-cyclohexadiene, 5-ethylidene-2-norbornene, 5-methylene-2-norbornene, vinylnorbornene, or mixtures thereof. Among these, the following are particularly preferred: ethylene/propylene copolymers (EPR) or ethylene/propylene/diene copolymers (EPDM); polyisobutene; butyl rubbers; halobutyl rubbers, in particular chlorobutyl or bromobutyl rubbers; or mixtures thereof.

According to one preferred embodiment, the coupling agent containing at least one ethylenic unsaturation (d), may be selected from those known in the art such as, for example: silane compounds containing at least one ethylenic unsaturation and at least one hydrolyzable group; epoxides containing at least one ethylenic unsaturation; monocarboxylic acids or, preferably, dicarboxylic acids containing at least one ethylenic unsaturation, or derivatives thereof, in particular anhydrides or esters; organic titanates, zirconates or aluminates containing at least one ethylenic unsaturation; or mixtures thereof.

Preferably, the silane compounds may be selected, for example, from: γ-methacryloxypropyltrimethoxysilane, methyltriethoxysilane, methyltris(2-methoxyethoxy)silane, dimethyldiethoxysilane, vinyltris(2-methoxyethoxy)silane, vinyltrimethoxysilane, vinyltriethoxysilane, octyltri-ethoxysilane, isobutyltriethoxysilane, isobutyltrimethoxysilane, or mixtures thereof.

Preferably, the epoxides may be selected, for example, from: glycidyl acrylate, glycidyl methacrylate, monoglycidyl ester of itaconic acid, glycidyl ester of maleic acid, vinyl glycidyl ether, allyl glycidyl ether, or mixtures thereof.

Preferably, the monocarboxylic or dicarboxylic acids, or derivatives thereof, may be selected, for example, from: maleic acid, maleic anhydride, fumaric acid, citraconic acid, itaconic acid, acrylic acid, methacrylic acid, and anhydrides or esters derived therefrom, or mixtures thereof. Maleic anhydride is particularly preferred.

In order to further improving the compatibility between the vulcanized rubber in a subdivided form (c) and the styrene-based thermoplastic elastomer (a), the thermoplastic elastomeric material according to the present invention may further comprise at least one aromatic monocarboxylic or dicarboxylic acid or a derivative thereof (e) such as, an anhydride or an ester.

Aromatic monocarboxylic or dicarboxylic acid or a derivative thereof (e) which may be used according to the present invention may be selected, for example, from: benzoic acid, phthalic acid, phthalic anhydride, trimellitic anhydride, di-2-ethylhexyl phthalate, di-isodecyl phthalate, tris-2-ethylhexyl trimellitate, or mixtures thereof.

According to one preferred embodiment, the aromatic monocarboxylic or dicarboxylic acids or derivatives thereof (e) is present in the thermoplastic elastomeric material of the present invention in an amount of from 0 parts by weight to 10 parts by weight, preferably from 0.01 parts by weight to 5 parts by weight, with respect to 100 parts by weight of (a) + (b).

Inorganic fillers (f) which may be used according to the present invention may be selected, for example, from: hydroxides, hydrated oxides, salts or hydrated salts of metals, in particular, of calcium, magnesium or aluminium, optionally in admixture with other inorganic fillers such as, for example, silicates, carbon black, or mixtures thereof.

Specific examples of suitable inorganic fillers are: magnesium hydroxide, aluminium hydroxide, aluminium oxide (including kaolin, i.e. an aluminium silicate), aluminium trihydrate, magnesium carbonate hydrate, magnesium carbonate, calcium carbonate hydrate, calcium carbonate, magnesium calcium carbonate hydrate, magnesium calcium carbonate, or mixture thereof. Said inorganic fillers (f) are preferably used in the form of particles with sizes ranging from 0.1 µm to 50 µm, preferably from 1 µm to 25 µm.

According to one preferred embodiment, the inorganic filler (f) is present in the thermoplastic elastomeric material of the present invention in an amount from 0 parts by weight to 200 parts by weight, preferably from 10 parts by weight to 50 parts by weight, with respect to 100 parts by weight of (a) + (b).

According to one preferred embodiment, the thermoplastic elastomeric material according to the present invention, in order to increase its opacity, may further comprise at least one syndiotactic 1,2-polybutadiene (g).

Preferably, the syndiotactic 1,2-polybutadiene may have an average molecular weight (number-average), which may be determined, for example, by gel permeation chromatography (GPC), of from 75,000 to 200,000, preferably from 100, 000 to 150,000. Preferably, said 1,2-polybutadiene has a crystallinity degree of from 10% to 90%, preferably from 20% to 40%.

According to one preferred embodiment, the syndiotactic 1,2-polybutadiene (g) is present in the thermoplastic elastomeric material of the present invention in an amount of from 0 parts by weight to 300 parts by weight, preferably from 5 parts by weight to 200 parts by weight, with respect to 100 parts by weight of (a) + (b).

In the case the styrene-based thermoplastic elastomer (a) does not include conjugated diene monomers, at least one coupling agent (d) may be added to the thermoplastic elastomeric material according to the present invention, in combination with at least one radical initiator (h), so as to graft the coupling agent (d) directly onto the styrene-based thermoplastic elastomer (a). An organic peroxides such as, for example, t-butyl perbenzoate, dicumyl peroxide, benzoyl peroxide, di-t-butyl peroxide, or mixtures thereof may, for example, be used as a radical initiator (h).

The amount of radical initiator (h) which may be added to the thermoplastic elastomeric material of the present invention is, generally, of from 0 parts by weight to 5 parts by weight, preferably from 0.01 parts by weight to 2 parts by weight, with respect to 100 parts by weight of (a) + (b).

It has to be noted that, in the case the styrene-based thermoplastic elastomer (a) includes conjugated diene monomers, the radical initiator (h) is not necessary. As a matter of fact, the addition of said radical initiator (h) may cause a crosslinking of the styrene-based thermoplastic elastomer (a) (scorching phenomena) which may negatively affect the Melt Flow Index (MFI) of the obtained thermoplastic elastomeric material. Consequently, in the case the styrene-based thermoplastic elastomer (a) includes conjugated diene monomers, the thermoplastic elastomeric material according to the present invention, is substantially devoid of a radical initiator (h).

For the aim of the present description and of the following claims, the term "substantially devoid of radical initiator (h)" means that, if present, the amount of the radical initiator (h) is not higher than 0.2 parts by weight with respect to 100 parts by weight of (a) + (b).

The thermoplastic elastomeric material according to the present invention may further comprises conventional additives such as lubricants (such as, for example, paraffinic or naphthenic oils), pigments, plasticizers, surface-modifying agents, UV absorbers, antioxidants, hindered amine or amide light stabilizers, or mixtures thereof.

Said thermoplastic elastomeric material may be prepared by first mixing the rubber vulcanized in a subdivided form (c), the styrene-based thermoplastic elastomer (a) and the coupling agent containing at least one ethylenic unsaturation (d). After said first mixing step, the other ingredients optionally present may be added to the thermoplastic elastomeric material. The mixing may be carried out according to techniques known in the art such as, for example, using an open-mill mixer or an internal mixer of the type with tangential rotors (Banbury) or interlocking rotors (Intermix), or in continuous mixers of the Ko-Kneader type (Buss) or co-rotating or counterrotating twin-screw type, The obtained thermoplastic elastomeric material may then be extruded and pelletized according to usual techniques. The pellets may be either packaged for future use or used immediately in a process of forming a manufactured product. The pellets or blends of the present invention may be formed into manufactured products according techniques known in the art for thermal processing of thermoplastic resin compositions. For example, compression molding, vacuum molding, injection molding, calendering, casting, extrusion, filament winding, laminating, rotational or slush molding, transfer molding, lay-up or contact molding, stamping, or combinations of these methods, may be used.

According to a further aspect, the present invention also relates to a manufactured product obtained by molding the thermoplastic elastomeric material above disclosed.

The thermoplastic elastomeric material according to the present invention may be used in the manufacture of a wide variety of shoes including canvas shoes, sport shoes, and dress shoes. In particular, said thermoplastic elastomeric material may be used for the purpose of soiling, innersoles, and the like.

Moreover, the thermoplastic elastomeric material according to the present invention may also be used in order to make, for example, belts such as, conveyor belts, power belts or driving belts; flooring and footpaths which may be used for recreational area, for industrial area, for sport or safety surfaces; flooring tiles; mats such as, anti-static computer mats, automotive floor mats; mounting pads; shock absorbers sheetings; sound barriers; membrane protections; carpet underlay; automotive bumpers; wheel arch liner; seals such as, automotive door or window seals; o-rings; gaskets; watering systems; pipes or hoses materials; flower pots; building blocks; roofing materials; geomembranes; and the like.

Alternatively, the thermoplastic elastomeric material according to the present invention, may be used in asphalt composition.

### Detailed description of the preferred embodiments

The present invention will be further illustrated below by means of a number of preparation examples, which are given for purely indicative purposes and without any limitation of this invention.

### EXAMPLES 1-3

### Preparation of the thermoplastic elastomeric materials

The thermoplastic elastomeric materials given in Table 1 were prepared as follows.

The Europrene^{®} SOL T171 (a), the vulcanized rubber (c) and the maleic anhydride (d), were mixed together in an internal mixer (model Pomini PL 1.6) for about 2 min. As soon as the temperature reached 190°C, a degassing step of 1 minutes was carried out, then the mixture was discharged. The obtained mixture was subsequently charged in an open roll mixer operating at a temperature of 150°C in order to obtain a sheet 1 mm thick.

**TABLE 1**

| EXAMPLE | 1(*) | 2 |
|---|---|---|
| Europrene^{®} SOL T171 | 100 | 100 |
| Vulcanized rubber⁽¹⁾ | 19.9 | 19.9 |
| Maleic anhydride⁽¹⁾ | - | 2.0 |

| | | |
|---|---|---|
| ^{(*)}: comparative; ⁽¹⁾ : parts by weight with respect to 100 parts by weight of (a) . Europrene® SOL T171: styrene-butadiene-styrene triblock copolymer of radial type containing about 43% by weight of styrene block and 50 phr of aromatic oil (Polimeri Europa); Vulcanized rubber: cryogenically ground waste rubber from scrap tires (<0.1 mm (140 mesh) - Applied Cryogenics International AG). | | |

Plates 1 mm thick were formed from the thermoplastic material obtained as disclosed above. The plates were prepared by molding for 10 minutes at 180°C and subsequent cooling for 5 minutes to room temperature.

The plates were used for determining the mechanical characteristics (i.e. stress at break and elongation at break) according to ASTM D638-02a Standard with the Instron instrument at a traction speed of 50 mm/min. The obtained results are given in Table 2.

Moreover, the DIN abrasion values were measured according to DIN 53516 Standard, also reported in Table 2, expressed as the amount of compound removed.

Furthermore, the Melt Flow Index (MFI) according to ASTM D1238-01e1 Standard, under 5 Kg and at a temperature of 190°C, was measured: the obtained data are given in Table 2.

**TABLE 2**

| EXAMPLE | 1(*) | 2 |
|---|---|---|
| Stress at break (MPa) | 5.7 | 7.1 |
| Elongation at break (%) | 837 | 896 |
| DIN abrasion (mm³) | 108 | 92 |
| MFI (5 Kg - 190°C) | 2.9 | 1.7 |

| | | |
|---|---|---|
| (*) : comparative. | | |

The data reported in Table 2 show that the thermoplastic elastomeric material according to the present invention (Example 2) has, with respect to the comparative composition comprising a vulcanized rubber in a subdivided form devoid of the coupling agent (Example 1), improved mechanical properties, in particular stress at break and elongation at break and improved abrasion resistance. Moreover, the Melt Flow Index (MFI) is not negatively affected.

### EXAMPLES 3-4

### Preparation of the thermoplastic elastomeric materials

The thermoplastic elastomeric materials given in Table 3 were prepared as follows.

The Europrene® SOL T171 (a), the vulcanized rubber (c) and the maleic anhydride (d), were mixed together in an internal mixer (model Pomini PL 1.6) for about 2 min. As soon as the temperature reached 190°C, a degassing step of 1 minutes was carried out, the polystyrene (b) was then added and the mixture was mixed for about 5 min. Then the mixture was discharged. The obtained mixture was subsequently charged in an open roll mixer operating at a temperature of 150°C in order to obtain a sheet 1 mm thick.

**TABLE 3**

| EXAMPLE | 3(*) | 4 |
|---|---|---|
| Europrene^{®} SOL T171⁽¹⁾ | 65.9 | 65.9 |
| Polystyrene⁽¹⁾ | 34.1 | 34.1 |
| Vulcanized rubber⁽²⁾ | 23.3 | 23.3 |
| Maleic anhydride⁽²⁾ | - | 2.3 |

| | | |
|---|---|---|
| (*) : comparative; ⁽¹⁾ : amount of (a) + (b) = 100; ⁽²⁾ : parts by weight with respect to 100 parts by weight of (a) + (b). Europrene® SOL T171:styrene-butadiene-styrene triblock copolymer of radial type containing about 43% by weight of styrene block and 50 phr of aromatic oil (Polimeri Europa); Polystyrene: recycled polystyrene (Socotech Verona S.p.A.); Vulcanized rubber: cryogenically ground waste rubber from scrap tires (<0.1 mm (140 mesh) - Applied Cryogenics International AG). | | |

The mechanical characteristics (i.e. stress at break and elongation at break), the DIN abrasion values, and the MFI, were measured as above reported: the obtained data are given in Table 4.

**TABLE 4**

| EXAMPLE | 3(*) | 4 |
|---|---|---|
| Stress at break (MPa) | 6.7 | 8.1 |
| Elongation at break (%) | 369 | 421 |
| DIN abrasion (mm³) | 146 | 117 |
| MFI (5 Kg - 190°C) | 9.7 | 4.0 |

| | | |
|---|---|---|
| (*) : comparative. | | |

The data reported in Table 4 show that the thermoplastic elastomeric material according to the present invention (Example 4) has, with respect to the comparative composition comprising a vulcanized rubber in a subdivided form devoid of the coupling agent (Example 3), improved mechanical properties, in particular stress at break and elongation at break and improved abrasion resistance.

Moreover, the Melt Flow Index (MFI) is not negatively affected.

### EXAMPLES 5-6

### Preparation of the thermoplastic elastomeric materials

The thermoplastic elastomeric materials given in Table 5 were prepared as follows.

The Europrene® SOL T171 (a), the vulcanized rubber (c) and the maleic anhydride (d), were mixed together in an internal mixer (model Pomini PL 1.6) for about 2 min. As soon as the temperature reached 190°C, a degassing step of 1. minutes was carried out, the polystyrene (b) and the K-Resin^{®} KR01 (b) were then added and the mixture was mixed for about 5 min. Then the mixture was discharged. The obtained mixture was subsequently charged in an open roll mixer operating at a temperature of 150°C in order to obtain a sheet 1 mm thick.

**TABLE 5**

| EXAMPLE | 3(*) | 4 |
|---|---|---|
| Europrene^{®} SOL T171⁽¹⁾ | 52.6 | 52.6 |
| Polystyrene⁽¹⁾ | 27.8 | 27.8 |
| K-Resin^{®} KR01⁽¹⁾ | 19.6 | 19.6 |
| Vulcanized rubber⁽²⁾ | 24.7 | 24.7 |
| Maleic anhydride⁽²⁾ | - | 2.5 |

| | | |
|---|---|---|
| ^{(*)}: comparative; ⁽¹⁾: (a) + (b) = 100; ⁽²⁾ : parts by weight with respect to 100 parts by weight of (a) + (b). Europrene^{®} SOL T171:styrene-butadiene-styrene triblock copolymer of radial type containing about 43% by weight of styrene block and 50 phr of aromatic oil (Polimeri Europa); Polystyrene: recycled polystyrene (Socotech Verona S.p.A.); K-Resin^{®} KR01: styrene-butadiene copolymer containing about 75% of styrene (Chevron Phillips); Vulcanized rubber: cryogenically ground waste rubber from scrap tires (<0.1 mm (140 mesh) - Applied Cryogenics International AG). | | |

The mechanical characteristics (i.e. stress at break and elongation at break), the DIN abrasion values, and the MFI, were measured as above reported: the obtained data are given in Table 6.

**TABLE 6**

| EXAMPLE | 5(*) | 6 |
|---|---|---|
| Stress at break (MPa) | 8.1 | 9.1 |
| Elongation at break (%) | 434 | 506 |
| DIN abrasion (mm³) | 139 | 127 |
| MFI (5 Kg - 190°C) | 11.7 | 3.2 |

| | | |
|---|---|---|
| ^{(*)}: comparative. | | |

The data reported in Table 6 show that the thermoplastic elastomeric material according to the present invention (Example 6) has, with respect to the comparative composition comprising a vulcanized rubber in a subdivided form devoid of the coupling agent (Example 5), improved mechanical properties, in particular stress at break and elongation at break and improved abrasion resistance. Moreover, the Melt Flow Index (MFI) is not negatively affected.

## Claims

1. Thermoplastic elastomeric material comprising:
(a) from 10% by weight to 100% by weight of at least one styrene-based thermoplastic elastomer;
(b) from 0% by weight to 90% by weight of at least one thermoplastic α-olefin homopolymer or copolymer different from (a);
the amount of (a) + (b) being 100;
(c) from 2 parts by weight to 90 parts by weight of a vulcanized rubber in a subdivided form;
(d) from 0.01 parts by weight to 10 parts by weight of at least one coupling agent containing at least one ethylenic unsaturation;
the amounts of (c) and (d) being expressed with respect to 100 parts by weight of (a) + (b).

2. Thermoplastic elastomeric material according to claim 1, comprising:
(a) from 20% by weight to 80% by weight of at least one styrene-based thermoplastic elastomer;
(b) from 20% by weight to 80% by weight of at least one thermoplastic α-olefin homopolymer or copolymer different from (a);
the amount of (a) + (b) being 100.

3. Thermoplastic elastomeric material according to claim 1 or 2, wherein the vulcanized rubber in a subdivided form (c) is present in an amount of from 5 parts by weight to 40 parts by weight with respect to 100 parts by weight of (a) + (b).

4. Thermoplastic elastomeric material according to any one of the preceding claims, wherein the coupling agent is present in an amount of from 0.05 parts by weight to 5 parts by weight with respect to 100 parts by weight of (a) + (b).

5. Thermoplastic elastomeric material according to any one of the preceding claims, wherein the styrene-based thermoplastic elastomer (a) comprises at least two terminal poly(monovinylaromatic hydrocarbon) blocks and at least one internal poly(conjugated diene) block and/or poly(aliphatic α-olefin) block.

6. Thermoplastic elastomeric material according to claim 5, wherein the styrene-based thermoplastic elastomer (a) is selected from block copolymers having the following formulae: A(BA)ₘ, A(BA')_{m'}, or (AB)ₙX, or (AB)ₚX(A'B')_{q} or (AB)ᵣX(B'')ₛ, wherein each of A and A' independently represent a polymer block comprising a monovinilydene aromatic monomer; B, B' and B" independently represent a polymer block comprising a conjugated diene monomer and/or an aliphatic α-olefin monomer; X represents a polyfunctional bridging moiety; n and r represent an integer not lower than 2; m and m' represents an integer ≥ 1; p, q and s represent an integer ≥ 1.

7. Thermoplastic elastomeric material according to claim 6, wherein the monovinylidene aromatic monomer of blocks A and A' is selected from: styrene, alkyl-substituted styrenes, alkoxy-substituted styrenes, vinyl naphthalene, alkyl-substituted vinyl naphthalene, vinyl xylene, alkyl-substituted vinyl xylene, or mixtures thereof.

8. Thermoplastic elastomeric material according to claim 6 or 7, wherein the conjugated diene monomer of blocks B, B' and B", is selected from conjugated dienes containing from 4 to 24 carbon atoms, such as 1,3-butadiene, isoprene, 2-ethyl-1,3-butadiene, 2,3-dimethyl-1,3-butadiene, 2-phenyl-1,3-butadiene, 1,3-pentadiene, methylpentadiene, 3-ethyl-1,3-pentadiene, 2,4-hexadiene, 3,4-dimethyl-1,3-hexadiene, 4,5-diethyl-1,3-octadiene, piperylene, or mixtures thereof.

9. Thermoplastic elastomeric material according to any one of claim 6 to 8, wherein the aliphatic α-olefin monomer is selected from ethylene, propylene, or mixtures thereof.

10. Thermoplastic elastomeric material according to any one of claims 6 to 9, wherein the polyfunctional bridging moiety comprises from 2 to 8 functional groups.

11. Thermoplastic elastomeric material according to any one of claims 6 to 10, wherein the blocks copolymers are selectively hydrogenated.

12. Thermoplastic elastomeric material according to any one of claims 6 to 11, wherein the blocks A and A' have a weight average molecular weight in the range of from 3,000 g/mol to 125,000 g/mol.

13. Thermoplastic elastomeric material according to any one of claims 6 to 12, wherein the blocks B, B' and B", have a weight average molecular weight in the range of from 10,000 g/mol to 300,000 g/mol.

14. Thermoplastic elastomeric material according to any one of claims 6 to 13, wherein the block copolymers have a total weight average molecular weight in the range of from 25,000 to 500,000.

15. Thermoplastic elastomeric material according to any one of claims 6 to 14, wherein the block copolymer has a triblock structure and may be of the linear or radial type, or any combination thereof.

16. Thermoplastic elastomeric material according to any one of claims 6 to 15, wherein the styrene-based thermoplastic elastomer (a) is selected from the following triblock copolymers: styrene-butadiene-styrene (S-B-S), styrene-isopren-styrene (S-I-S), styrene-ethylene/butene-styrene (S-EB-S), or mixtures thereof.

17. Thermoplastic elastomeric material according to any one of the preceding claims, wherein in the thermoplastic α-olefin homopolymer or copolymer (b), different from (a), the α-olefin is an aliphatic or aromatic α-olefin of formula CH₂=CH-R, wherein R represents a hydrogen atom; a linear or branched alkyl group containing from 1 to 12 carbon atoms; an aryl group having from 6 to 14 carbon atoms.

18. Thermoplastic elastomeric material according to claim 17, wherein the aliphatic α-olefin is selected from: ethylene, propylene, 1-butene, isobutylene, 1-pentene, 1-hexene, 3-methyl-1-butene, 3-methyl-1-pentene, 4-methyl-1-pentene, 4-methyl-1-hexene, 4,4-dimethyl-1-hexene, 4,4-dimethyl-1-pentene, 4-ethyl-1-hexene, 3-ethyl-1-hexene, 1-octene, 1-decene, 1-dodecene, 1-tetradecene, 1-hexadecene, 1-octadecene, 1-eicosene, or mixture thereof.

19. Thermoplastic elastomeric material according to claim 17, wherein the aromatic α-olefin is selected from: styrene, α-methylstyrene, or mixtures thereof.

20. Thermoplastic elastomeric material according to any one of claims 17 to 19, wherein the thermoplastic α-olefin homopolymer or copolymer (b) is selected from:
- propylene homopolymers or copolymer of propylene with ethylene and/or an α-olefin having from 4 to 12 carbon atoms with an overall content of ethylene and/or α-olefin lower than 10% by mole;
- ethylene homopolymers or copolymers of ethylene with at least one α-olefin having from 4 to 12 carbon atoms and, optionally, at least one polyene;
- styrene polymers such as styrene homopolymers; copolymers of styrene with at least one C₁-C₄ alkyl-styrene or with at least one natural or synthetic elastomer such as polybutadiene, polyisoprene, butyl rubber, ethylene/propylene/diene copolymer (EPDM), ethylene/propylene copolymers (EPR), natural rubber, epichlorohydrin;
- copolymers of ethylene with at least one ethylenically unsaturated ester selected from: alkyl acrylates, alkyl methacrylates and vinyl carboxylate, wherein the alkyl group, linear or branched, has from 1 to 8 carbon atoms, while the carboxylate group, linear or branched, has from 2 to 8 carbon atoms; and wherein the ethylenically unsaturated ester is generally present in an amount of from 0.1% to 80% by weight with respect to the total weight of the copolymer.

21. Thermoplastic elastomeric material according to claim 20, wherein the ethylene homopolymers or copolymers of ethylene with at least one α-olefin having from 4 to 12 carbon atoms are selected from: low density polyethylene (LDPE), medium density polyethylene (MDPE), high density polyethylene (HDPE), linear low density polyethylene (LLDPE), ultra-low density polyethylene (ULDPE), or mixtures thereof.

22. Thermoplastic elastomeric material according to claim 20, wherein the copolymers of ethylene with at least one α-olefin having from 4 to 12 carbon atoms and optionally at least one polyene are selected from:
- elastomeric copolymers having the following monomer composition: 35 mol%-90 mol% of ethylene; 10 mol%-65 mol% of an aliphatic α-olefin; 0 mol%-10 mol% of a polyene;
- copolymers having the following monomer composition: 75 mol%-97 mol% of ethylene; 3 mol%-25 mol% of an aliphatic α-olefin; 0 mol%-5 mol% of a polyene.

23. Thermoplastic elastomeric material according to claim 20, wherein.the styrene polymers, different from (a), are:
syndiotactic polystyrene, atactic polystyrene, isotactic polystyrene, styrene-methylstyrene copolymer, styrene-isoprene copolymer or styrene-butadiene copolymer, styrene-ethylene/propylene (S-EP) or styrene-ethylene/butene (S-EB) diblock copolymers; styrene-butadiene or styrene-isoprene branched copolymers; or mixtures thereof.

24. Thermoplastic material according to claim 20, wherein the copolymers of ethylene with at least one ethylenically unsaturated ester are selected from: ethylene/vinylacetate copolymer (EVA), ethylene/ethylacrylate copolymer (EEA), ethylene/butylacrylate copolymer (EBA), or mixtures thereof.

25. Thermoplastic elastomeric material according to any one of the preceding claims, wherein the vulcanized rubber in a subdivided form (c) has a particle size not higher than 10 mm.

26. Thermoplastic elastomeric material according to claim 25, wherein the vulcanized rubber in a subdivided form (c) has a particle size not higher than 5 mm.

27. Thermoplastic elastomeric material according to any one of claims 1 to 24, wherein the vulcanized rubber in a subdivided form (c) has a particle size not higher than 0.5 mm.

28. Thermoplastic elastomeric material according to claim 27, wherein the vulcanized rubber in a subdivided form (c) has a particle size not higher than 0.2 mm.

29. Thermoplastic elastomeric material according to claim 28, wherein the vulcanized rubber in a subdivided form (c) has a particle size not higher than 0.1 mm.

30. Thermoplastic elastomeric material according to any one of the preceding claims, wherein the vulcanized rubber in a subdivided form (c) comprises at least one crosslinked diene elastomeric polymer or copolymer of natural origin or obtained by solution polymerization, emulsion polymerization or gas-phase polymerization of one or more conjugated diolefins, optionally blended with at least one comonomer selected from monovinylarenes and/or polar comonomers in an amount of not more than 60% by weight.

31. Thermoplastic elastomeric material according to claim 30, wherein the crosslinked diene elastomeric polymer or copolymer is selected from: cis-1,4-polyisoprene, 3,4-polyisoprene, polybutadiene, optionally halogenated isoprene/isobutene copolymers, 1,3-butadiene/acrylonitrile copolymers, styrene/1,3-butadiene copolymers, styrene/isoprene/1,3-butadiene copolymers, styrene/1,3-butadiene/acrylonitrile copolymers, or mixtures thereof.

32. Thermoplastic elastomeric material according to any one of the preceding claims, wherein the vulcanized rubber in a subdivided form (c) further comprises at least one crosslinked elastomeric polymer of one or more monoolefins with an olefinic comonomer or derivatives thereof.

33. Thermoplastic elastomeric material according to claim 32, wherein the crosslinked elastomeric polymer is selected from: ethylene/propylene copolymers (EPR) or ethylene/propylene/diene copolymers (EPDM); polyisobutene; butyl rubbers; halobutyl rubbers, in particular chlorobutyl or bromobutyl rubbers; or mixtures thereof.

34. Thermoplastic elastomeric material according to any one of the preceding claims, wherein the coupling agent-containing at least one ethylenic unsaturation (d) is selected from: silane compounds containing at least one ethylenic unsaturation and at least one hydrolyzable group; epoxides containing at least one ethylenic unsaturation; monocarboxylic acids or dicarboxylic acids containing at least one ethylenic unsaturation, or derivatives thereof; organic titanates, zirconates or aluminates containing at least one ethylenic unsaturation.

35. Thermoplastic elastomeric material according to claim 34, wherein the silane compounds are selected from: γ-methacryloxypropyltrimethoxysilane, methyltriethoxy-silane, methyltris(2-methoxyethoxy)silane, dimethyl-diethoxysilane, vinyltris(2-methoxyethoxy)silane, vinyltrimethoxysilane, vinyltriethoxysilane, octyltri-ethoxysilane, isobutyltriethoxysilane, isobutyl-trimethoxysilane, or mixtures thereof.

36. Thermoplastic elastomeric material according to claim 34, wherein the epoxides are selected from: glycidyl acrylate, glycidyl methacrylate, monoglycidyl ester of itaconic acid, glycidyl ester of maleic acid, vinyl glycidyl ether, allyl glycidyl ether, or mixtures thereof.

37. Thermoplastic elastomeric material according to claim 34, wherein the monocarboxylic or dicarboxylic acids, or derivatives thereof, are selected from: maleic acid, maleic anhydride, fumaric acid, citraconic acid, itaconic acid, acrylic acid, methacrylic acid, and anhydrides or esters derived therefrom, or mixtures thereof.

38. Thermoplastic elastomeric material according to any one of the preceding claims further comprising at least one aromatic monocarboxylic or dicarboxylic acid or a derivative thereof (e) such as, an anhydride or an ester.

39. Thermoplastic elastomeric material according to claim 38, wherein the aromatic monocarboxylic or dicarboxylic acid or a derivative thereof is selected from: benzoic acid, phthalic acid, phthalic anhydride, trimellitic anhydride, di-2-ethylhexyl phthalate, di-isodecyl phthalate, tris-2-ethylhexyl trimellitate, or mixtures thereof.

40. Thermoplastic elastomeric material according to claim 38 or 39, wherein the aromatic monocarboxylic or dicarboxylic acid or a derivatives thereof (e) is present in an amount of from 0 parts by weight to 10 parts by weight with respect to 100 parts by weight of (a) + (b).

41. Thermoplastic elastomeric material according to claim 40, wherein the aromatic monocarboxylic or dicarboxylic acid or a derivative thereof (e) is present in an amount of from 0.01 parts by weight to 5 parts by weight with respect to 100 parts by weight of (a) + (b).

42. Thermoplastic elastomeric material according to any one of the preceding claims further comprising at least one inorganic filler (f).

43. Thermoplastic elastomeric material according to claim 42, wherein the inorganic filler (f) are selected from: hydroxides, hydrated oxides, salts or hydrated salts of metals, in particular, of calcium, magnesium or aluminium, optionally in admixture with other inorganic fillers such as silicates, carbon black, or mixtures thereof.

44. Thermoplastic elastomeric material according to claim 43, wherein the inorganic fillers are: magnesium hydroxide, aluminium hydroxide, aluminium oxide, aluminium trihydrate, magnesium carbonate hydrate, magnesium carbonate, calcium carbonate hydrate, calcium carbonate, magnesium calcium carbonate hydrate, magnesium calcium carbonate, or mixture thereof.

45. Thermoplastic elastomeric material according to any one of claims 42 to 44, wherein the inorganic filler (f) is present in an amount from 0 parts by weight to 200 parts by weight with respect to 100 parts by weight of (a) + (b).

46. Thermoplastic elastomeric material according to claim 45, wherein the inorganic filler (f) is present in an amount from 10 parts by weight to 50 parts by weight, with respect to 100 parts by weight of (a) + (b).

47. Thermoplastic elastomeric material according to any one of the preceding claims further comprising at least one syndiotactic 1,2-polybutadiene (g).

48. Thermoplastic elastomeric material according to claim 47, wherein the syndiotactic 1,2-polybutadiene has an average molecular weight (number-average) of from 75,000 to 200,000.

49. Thermoplastic elastomeric material according to claim 47 or 48, wherein the 1,2-polybutadiene has a crystallinity degree of from 10% to 90%.

50. Thermoplastic elastomeric material according to any one of claims 47 to 49, wherein the syndiotactic 1,2-polybutadiene (g) is present in an amount of from 0 parts by weight to 300 parts by weight with respect to the 100 parts by weight of (a) + (b).

51. Thermoplastic elastomeric material according to claim 50, wherein the syndiotactic 1,2-polybutadiene (g) is present in an amount of from 5 parts by weight to 200 parts by weight, with respect to the 100 parts by weight of (a) + (b).

52. Thermoplastic elastomeric material according to any one of the preceding claims, further comprising a radical initiator (h).

53. Thermoplastic elastomeric material according to claim 52, wherein the radical initiator (h) is selected from organic peroxides such as t-butyl perbenzoate, dicumyl peroxide, benzoyl peroxide, di-t-butyl peroxide, or mixtures thereof.

54. Thermoplastic elastomeric material according to claim 52 or 53, wherein the radical initiator (h) is added in an amount of from 0 parts by weight to 5 parts by weight with respect to 100 parts by weight of (a) + (b).

55. Thermoplastic elastomeric material according to claim 54, wherein the radical initiator (h) is added in an amount of from .0.01 parts by weight to 2 parts by weight with respect to 100 parts by weight of (a) + (b).

56. Thermoplastic elastomeric material according to any one of the preceding claims, wherein the styrene-based thermoplastic elastomer (a) includes conjugated diene monomers and the thermoplastic elastomeric material is substantially devoid of a radical initiator (h).

57. Manufactured product obtained by molding a thermoplastic elastomeric material according to any one of the preceding claims.

58. Manufactured product comprising a thermoplastic elastomeric material according to any one of the preceding claims.

59. Manufactured product according to claim 57 or 58, said manufactured product being selected from: shoe soles, shoe foxing, shoe innersoles.

60. Manufactured product according to claim 57 or 58, said manufactured product being selected from: belts; flooring and footpaths; flooring tiles; mats; shock absorbers sheetings; sound barriers; membrane protections; carpet underlay; automotive bumpers; wheel arch liner; seals; o-rings; gaskets; watering systems; pipes or hoses materials; flower pots; building blocks; roofing materials; geomembranes.

## Patentansprüche

1. Thermoplastisches elastomeres Material, umfassend:
(a) von 10 bis 100 Gew.-% mindestens eines thermoplastischen Elastomers auf Styrolbasis;
(b) von 0 bis 90 Gew.-% mindestens eines thermoplastischen α-Olefin-Homopolymers oder
- Copolymers, verschieden von (a);
wobei die Menge von (a) + (b) 100 ist;
(c) von 2 bis 90 Gew.-Teile eines vulkanisierten Kautschuks in einer unterteilten Form;
(d) von 0,01 bis 10 Gew.-Teile mindestens eines Haftvermittlers, der mindestens eine ethylenische Ungesättigtheit enthält,
wobei die Mengen von (c) und (d) in Bezug auf 100 Gew.-Teile von (a) + (b) angegeben sind.

2. Thermoplastisches elastomeres Material gemäß Anspruch 1, umfassend:
(a) 20 bis 80 Gew.-% mindestens eines thermoplastischen Elastomers auf Styrolbasis;
(b) von 20 bis 80 Gew.-% mindestens eines thermoplastischen α-Olefin-Homopolymers oder -Copolymers, verschieden von (a);
wobei die Menge von (a) + (b) 100 ist.

3. Thermoplastisches elastomeres Material gemäß Anspruch 1 oder 2, in dem der vulkanisierte Kautschuk in einer unterteilten Form (c) in einer Menge von 5 bis 40 Gew.-Teilen in Bezug auf 100 Gew.-Teile von (a) + (b) vorliegt.

4. Thermoplastisches elastomeres Material gemäß mindestens einem der vorhergehenden Ansprüche, in dem der Haftvermittler in einer Menge von 0,05 bis 5 Gew.-Teilen in Bezug auf 100 Gew.-Teile von (a) + (b) vorliegt.

5. Thermoplastisches elastomeres Material gemäß mindestens einem der vorhergehenden Ansprüche, in dem das thermoplastische Elastomer auf Styrolbasis (a) mindestens 2 endständige Poly(monovinylaromatischer Kohlenwasserstoff)-Blöcke und mindestens einen inneren foly(konjugiertec Dien)-Block und/oder Poly(aliphatisches α-Olefin)-Block enthält.

6. Thermoplastisches elastomeres Material gemäß Anspruch 5, in dem das thermoplastische Elastomer (a) auf Styrolbasis ausgewählt ist aus Blockcopolymeren mit den folgenden Formeln: A(BA)ₘ, A(BA')ₘ, oder (AB)ₙX oder (AB)ₚX(A'B')_{q} oder (AB)ᵣX(B")ₛ, worin A und A' jeweils unabhängig einen Polymerblock bezeichnen, der ein aromatisches Monovinyliden-Monomer umfasst; B, B' und B" unabhängig einen Polymerblock bezeichnen, der ein konjugiertes Dienmonomer und/oder ein aliphatisches α-olefin-Monomer umfasst; X eine polyfunktionelle Brückeneinheit bezeichnet; n und r eine ganze zahl nicht unter 2; m und m' eine ganze Zahl ≥ 1 bezeichnen; p, q und s eine ganze zahl ≥ 1 bezeichnen.

7. Thermoplastisches elastomeres Material gemäß Anspruch 6, in dem das aromatische Monovinyliden-Monomer der Blöcke A und A' ausgewählt ist aus Styrol, alkylsubstituierten Styrolen, alkoxysubstituierten Styrolen, Vinylnaphthalin, alkylsubstituiertem Vinylnaphthalin, Vinylxylol, alkylsubstituiertem Vinylxylol oder Mischungen davon.

8. Thermoplastisches elastomeres Material gemäß Anspruch 6 oder 7, in dem das konjugierte Dienmonomer der Blöcke B, B' und B" ausgewählt ist aus konjugierten Dienen, die 4 bis 24 Kohlenstoffatome enthalten, wie beispielsweise 1,3-Butadien, Isopren, 2-Ethyl-1,3-butadien, 2,3-Dimethyl-1,3-butadien, 2-Phenyl-1,3-butadien, 1,3-Pentadien, Methylpentadien, 3-Ethyl-1,3-pentadien, 2,4-Hexadien, 3,4-Dimethyl-1,3-hexadien, 4,5-Diethyl-1,3-octadien, Pipezylen oder Mischungen davon.

9. Thermoplastisches elastomeres Material gemäß mindestens einem der Ansprüche 6 bis 8, in dem das aliphatische α-Olefin-Monomer ausgewählt ist aus Ethylen, Propylen oder Mischungen davon.

10. Thermoplastisches elastomeres Material gemäß mindestens einem der Ansprüche 6 bis 9, in dem die polyfunktionelle Brückeneinheit 2 bis 8 funktionelle Gruppen umfasst.

11. Thermoplastisches elastomeres Material gemäß mindestens einem der Ansprüche 6 bis 10, in dem die Blockcopolymere selektiv hydriert sind.

12. Thermoplastisches elastomeres Material gemäß mindestens einem der Ansprüche 6 bis 11, in dem die Blöcke A und A' ein gewichtsmittleres Molekulargewicht im Bereich von 3.000 g/mol bis 125.000 g/mol haben.

13. Thermoplastisches elastomeres Material gemäß mindestens einem der Ansprüche 6 bis 12, in dem die Blöcke B, B' und B" ein gewichtsmittleres Molekulargewicht im Bereich von 10.000 g/mol bis 300.000 g/mol haben.

14. Thermoplastisches elastomeres Material gemäß mindestens einem der Ansprüche 6 bis 13, in dem die Blockcopolymere ein gewichtsmittleres Gesamtmolekulargewicht im Bereich von 25.000 bis 500.000 haben.

15. Thermoplastisches elastomeres Material gemäß mindestens einem der Ansprüche 6 bis 14, in dem das Blockcopolymer eine Triblockstruktur hat und vom linearen oder radialen Typ oder eine beliebige Kombination davon sein kann.

16. Thermoplastisches elastomeres Material gemäß mindestens einem der Ansprüche 6 bis 15, in dem das thermoplastische Elastomer (a) auf Styrolbasis ausgewählt ist aus den folgenden Triblock-Copolymeren: Styrol-Butadien-Styrol (S-B-S), Styrol-Isopren-Styrol (S-I-S), Styrol-Ethylen/Buten-Styrol (S-EB-S) oder Mischungen davon.

17. Thermoplastisches elastomeres Material gemäß mindestens einem der vorhergehenden Ansprüche, in dem in dem thermoplastischen α-Olefin-Homopolymer oder -Copolymer (b) verschieden von (a) das α-Olefin ein aliphatisches oder aromatisches α-Olefin der Formel CH₂=CH-R ist, worin R ein Wasserstoffatom, eine lineare oder verzweigte Alkylgruppe, die 1 bis 12 Kohlenstoffatome enthält; eine Arylgruppe mit 6 bis 14 Kohlenstoffatomen bezeichnet.

18. Thermoplastisches elastomeres Material gemäß Anspruch 17, in dem das aliphatische α-olefin aus Ethylen, Propylen, 1-Buten, Isobutylen, 1-Penten, 1-Hexen, 3-Methyl-1-buten, 3-Methyl-1-penten, 4-Methyl-1-penten, 4-Methyl-1-hexen, 4,4-Dimethyl-1-hexen, 4,4-Dimethyl-1-penten, 4-Ethyl-1-hexen, 3-Ethyl-1-hexen, 1-Octen, 1-Decen, 1-Dodecen, 1-Tetradecen, 1-Hexadecen, 1-Octadecen, 1-Eicosen oder einer Mischung davon ausgewählt ist.

19. Thermoplastisches elastomeres Material gemäß Anspruch 17, in dem das aromatische α-Olefin aus Styrol, α-Methylstyrol oder Mischungen davon ausgewählt ist.

20. Thermoplastisches elastomeres Material gemäß mindestens einem der Ansprüche 17 bis 19, in dem das thermoplastische α-Olefin-Homopolymer oder -Copolymer (b) ausgewählt ist aus:
- Propylen-Homopolymeren oder Copolymer von Propylen mit Ethylen und/oder einem α-Olefin mit 4 bis 12 Kohlenstoffatomen mit einem Gesamtgehalt an Ethylen und/oder α-Olefin unter 10 mol%;
- Ethylen-Homopolymeren oder Copolymeren von Ethylen mit mindestens einem α-Olefin mit 4 bis 12 Kohlenstoffatomen und gegebenenfalls mindestens einem Polyen;
- Styrolpolymeren, wie Styrol-Homopolymeren; Copolymeren von Styrol mit mindestens einem C₁-C₄-Alkylstyrol oder mit mindestens einem natürlichen oder synthetischen Elastomer, wie Polybutadien, Polyisopren, Butylkautschuk, Ethylen/Propylen/Dien-Copolymer (EPDM), Ethylen/Propylen-Copolymeren (EPR), natürlichem Kautschuk, Epichlorhydrin;
- Copolymeren von Ethylen mit mindestens einem ethylenisch ungesättigten Ester, ausgewählt aus Alkylacrylaten, Alkylmethacrylaten und Vinylcarboxylat, in denen die Alkylgruppe, linear oder verzweigt, 1 bis 8 Kohlenstoffatome hat, während die Carboxylatgruppe, linear oder verzweigt, 2 bis 8 Kohlenstoffatome hat; und wobei der ethylenisch ungesättigte Ester allgemein in einer Menge von 0,1 bis 80 Gew.-% in Bezug auf das Gesamtgewicht des Copolymers vorliegt.

21. Thermoplastisches elastomeres Material gemäß Anspruch 20, in dem die Ethylen-Homopolymere oder Copolymere von Ethylen mit mindestens einem α-olefin mit 4 bis 12 Kohlenstoffatomen ausgewählt sind aus Polyethylen niedriger Dichte (LDPE), Polyethylen mittlerer Dichte (MDPE), Polyethylen hoher Dichte (HDPE), linearem Polyethylen niedriger Dichte (LLDPE), Polyethylen ultraniedriger Dichte (ULDPE) oder Mischungen davon.

22. Thermoplastisches elastomeres Material gemäß Anspruch 20, in dem die Copolymere von Ethylen mit mindestens einem α-Olefin mit 4 bis 8 Kohlenstoffatomen und gegebenenfalls einem Polyen ausgewählt sind aus:
- elastomeren Copolymeren mit der folgenden Monomerzusammensetzung: 35 bis 90 mol% Ethylen; 10 bis 65 mol% eines aliphatischen α-Olefins; 0 bis 10 mol% eines Polyens;
- Copolymeren mit der folgenden Monomerzusammensetzung: 75 bis 97 mol% Ethylen; 3 bis 25 mol% eines aliphatischen α-olefins; 0 bis 5 mol% eines Polyens.

23. Thermoplastisches elastomeres Material gemäß Anspruch 20, in dem die Styrolpolymere verschieden von (a) syndiotaktisches Polystyrol, ataktisches Polystyrol, isotaktisches Polystyrol, Styrol-Methylstyrol-Copolymer, Styrol-Isopren-Copolymer oder Styrol-Butadien-Copolymer, Styrol-Ethylen/Propylen (S-EP)- oder Styrol-Ethylen/Buten (S-EB)-Diblock-Copolymere; Styrol-Butadien oder verzweigte Strol-Isopren-Copolymere oder Mischungen davon sind.

24. Thermoplastisches Material gemäß Anspruch 20, in dem die Copolymere von Ethylen mit mindestens einem ethylenisch ungesättigten Ester aus Ethylen/Vinylacetat-Copolymer (EVA), Ethylen/Ethylacrylat-Copolymer (EEA), Ethylen/Butylacrylat-Copolymer (EBA) oder Mischungen davon ausgewählt sind.

25. Thermoplastisches elastomeres Material gemäß mindestens einem der vorhergehenden Ansprüche, in dem der vulkanisierte Kautschuk in einer unterteilten Form (c) eine Partikelgröße nicht größer als 10 mm hat.

26. Thermoplastisches elastomeres Material gemäß Anspruch 25, in dem der vulkanisierte Kautschuk in einer unterteilten Form (c) eine Partikelgröße nicht über 5 mm hat.

27. Thermoplastisches elastomeres Material gemäß mindestens einem der Ansprüche 1 bis 24, in dem der vulkanisierte Kautschuk in einer unterteilten Form (c) eine Partikelgröße nicht größer als 0,5 mm hat.

28. Thermoplastisches elastomeres Material gemäß Anspruch 27, in dem der vulkanisierte Kautschuk in einer unterteilten Form (c) eine Partikelgröße nicht größer als 0,2 mm hat.

29. Thermoplastisches elastomeres Material gemäß Anspruch 28, in dem der vulkanisierte Kautschuk in einer unterteilten Form (c) eine Partikelgröße nicht größer als 0,1 mm hat.

30. Thermoplastisches elastomeres Material gemäß mindestens einem der vorhergehenden Ansprüche, in dem der vulkanisierte Kautschuk in einer unterteilten Form (c) mindestens ein vernetztes elastomeres Dienpolymer oder
- copolymer natürlichen Ursprungs oder erhalten durch Lösungspolymerisation, Emulsionspolymerisation oder Gasphasenpolymerisation eines oder mehrerer konjugierter Diolefine, gegebenenfalls vermischt mit mindestens einem Comonomer, ausgewählt aus Monovinylarenen und/oder polaren Comonomeren in einer Menge von nicht mehr als 60 Gew.-% umfasst.

31. Thermoplastisches elastomeres Material gemäß Anspruch 30, in dem das vernetzte elastomere Dienpolymer oder
- copolymer aus cis-1,4-Polyisopren, 3,4-Polyisopren, Polybutadien, gegebenenfalls halogenierten Isopren/Isobuten-Copolymeren, 1,3-Butadien/Acrylnitril-Copolymeren, Styrol/1,3-Butadien-Copolymeren, Styrol/Isopren/1,3-butadien-Copolymeren, Styrol/1,3-Butadien/Acrylnitril-Copolymeren oder Mischungen davon ausgewählt ist.

32. Thermoplastisches elastomeres Material gemäß mindestens einem der vorhergehenden Ansprüche, in dem der vulkanisierte Kautschuk in einer unterteilten Form (c) ferner mindestens ein vernetztes elastomeres Polymer von einem oder mehreren Monoolefinen mit einem olefinischen Comonomer oder Derivaten davon umfasst.

33. Thermoplastisches elastomeres Material gemäß Anspruch 32, in dem das vernetzte elastomere Polymer aus Ethylen/Propylen-Copolymeren (EPR) oder Ethylen/Propylen/Dien-Copolymeren (EPDM); Polyisobuten; Butylkautschuken; halogenierten Butylkautschuken, insbesondere Chlorbutyl- oder Brombutylkautschuken oder Mischungen davon ausgewählt ist.

34. Thermoplastisches elastomeres Material gemäß mindestens einem der vorhergehenden Ansprüche, in dem der Haftvermittler (d), der mindestens eine ethylenische Ungesättigtheit enthält, aus Silanverbindungen, die mindestens eine ethylenische Ungesättigtheit und mindestens eine hydrolysierbare Gruppe enthalten, Epoxiden, die mindestens eine ethylenische Ungesättigtheit enthalten; Monocarbonsäuren oder Dicarbonsäuren, die mindestens eine ethylenische Ungesättigtheit enthalten, oder Derivaten davon; organischen Titanaten, zirkonaten oder Aluminaten, die mindestens eine ethylenische Ungesättigtheit enthalten, ausgewählt ist.

35. Thermoplastisches elastomeres Material gemäß Anspruch 34, in dem die Silanverbindungen aus γ-Methacryloxypropyltrimethoxysilan, Methyltriethoxysilan, Methyltris(2-methoxyethoxy)silan, Dimethyl-diethoxysilan, Vinyltris(2-methoxyethoxy)silan, vinyltrimethoxysilan, Vinyltriethoxysilan, Octyltriethoxysilan, Isobutyltriethoxysilan, Isobutyltrimethoxysilan oder Mischungen davon ausgewählt sind.

36. Thermoplastisches elastomeres Material gemäß Anspruch 34, in dem die Epoxide aus Glycidylacrylat, Glycidylmethacrylat, Monoglycidylester von Itaconsäure, Glycidylester von Maleinsäure, Vinylglycidylether, Allylglycidylether oder Mischungen davon ausgewählt sind.

37. Thermoplastisches elastomeres Material gemäß Anspruch 34, in dem die Monocarbon- oder Dicarbonsäuren oder Derivate davon aus Maleinsäure, Maleinsäureanhydrid, Fumarsäure, Citraconsäure, Itaconsäure, Acrylsäure, Methacrylsäure und davon abgeleiteten Anhydriden oder Estern davon oder Mischungen davon ausgewählt sind.

38. Thermoplastisches elastomeres Material gemäß mindestens einem der vorhergehenden Ansprüche, das ferner mindestens eine aromatische Monocarbon- oder Dicarbonsäure oder ein Derivat davon (e), beispielsweise ein Anhydrid oder einen Ester enthält.

39. Thermoplastisches elastomeres Material gemäß Anspruch 38, in dem die aromatische Monocarbon- oder Dicarbonsäure oder das Derivat davon aus Benzoesäure, Phthalsäure, Phthalsäureanhydrid, Trimellitsäureanhydrid, Di-2-ethylhexylphthalat, Di-isodecylphthalat, Tris-2-ethylhexyltrimellitat oder Mischungen davon ausgewählt ist.

40. Thermoplastisches elastomeres Material gemäß Anspruch 38 oder 39, in dem die aromatische Monocarbon- oder Dicarbonsäure oder ein Derivat davon (e) in einer Menge von 0 bis 10 Gew.-Teilen in Bezug auf 100 Gew.-Teile von (a) + (b) vorliegt.

41. Thermoplastisches elastomeres Material gemäß Anspruch 40, in dem die aromatische Monocarbon- oder Dicarbonsäure oder ein Derivat davon (e) in einer Menge von 0,01 bis 5 Gew.-Teilen in Bezug auf 100 Gew.-Teile von (a) + (b) vorliegt.

42. Thermoplastisches elastomeres Material gemäß mindestens einem der vorhergehenden Ansprüche, das ferner mindestens einen anorganischen Füllstoff (f) enthält.

43. Thermoplastisches elastomeres Material gemäß Anspruch 42, in dem der anorganische Füllstoff (f) aus Hydroxiden, hydratisierten Oxiden, Salzen oder Hydratsalzen von Metallen, insbesondere von Calcium, Magnesium oder Aluminium, gegebenenfalls unter zumischung von anderen anorganischen Füllstoffen, wie Silikaten, Ruß oder Mischungen davon ausgewählt ist.

44. Thermoplastisches elastomeres Material gemäß Anspruch 43, in dem die anorganischen Füllstoffe Magnesiumhydroxid, Aluminiumhydroxid, Aluminiumoxid, Aluminiumtrihydrat, Magnesiumcarbonathydrat, Magnesiumcarbonat, Calciumcarbonathydrat, Calciumcarbonat, Magnesiumcalciumcarbonathydrat, Magnesiumcalciumcarbonat oder Mischungen davon sind.

45. Thermoplastisches elastomeres Material gemäß mindestens einem der Ansprüche 42 bis 44, in dem der anorganische Füllstoff (f) in einer Menge von 0 bis 200 Gew.-Teilen in Bezug auf 100 Gew.-Teile von (a) + (b) vorliegt.

46. Thermoplastisches elastomeres Material gemäß Anspruch 45, in dem der anorganische Füllstoff (f) in einer Menge von 10 bis 50 Gew.-Teilen in Bezug auf 100 Gew.-Teile von (a) + (b) vorliegt.

47. Thermoplastisches elastomeres Material gemäß mindestens einem der vorhergehenden Ansprüche, das ferner mindestens ein syndiotaktisches 1,2-Polybutadien (g) enthält.

48. Thermoplastisches elastomeres Material gemäß Anspruch 47, in dem das syndiotaktische 1,2-Polybutadien ein mittleres Molekulargewicht (zahlenmittleres) von 75.000 bis 200.000 hat.

49. Thermoplastisches elastomeres Material gemäß Anspruch 47 oder 48, in dem das 1,2-Polybutadien einen Kristallinitätsgrad von 10 bis 90 % hat.

50. Thermoplastisches elastomeres Material gemäß mindestens einem der Ansprüche 47 bis 49, in dem das syndiotaktische 1,2-Polybutadien (g) in einer Menge von 0 bis 300 Gew.-Teilen in Bezug auf die 100 Gew.-Teile von (a) + (b) vorliegt.

51. Thermoplastisches elastomeres Material gemäß Anspruch 50, in dem das syndiotaktische 1,2-Polybutadien (g) in einer Menge von 5 bis 200 Gew.-Teilen in Bezug auf die 100 Gew.-Teile von (a) + (b) vorliegt.

52. thermoplastisches elastomeres Material gemäß mindestens einem der vorhergehenden Ansprüche, das ferner einen Radikalstarter (h) umfasst.

53. Thermoplastisches elastomeres Material gemäß Anspruch 52, in dem der Radikalstarter (h) ausgewählt ist aus organischen Peroxiden, wie t-Butylperbenzoat, Dicumylperoxid, Benzoylperoxid, Di-t-butylperoxid oder Mischungen davon.

54. Thermoplastisches elastomeres Material gemäß Anspruch 52 oder 53, in dem der Radikalstarter (h) in einer Menge von 0 bis 5 Gew.-Teilen in Bezug auf 100 Gew.-Teile von (a) + (b) zugesetzt ist.

55. Thermoplastisches elastomeres Material gemäß Anspruch 54, in dem der Radikalstarter (h) in einer Menge von 0,01 bis 2 Gew.-Teilen in Bezug auf 100 Gew.-Teile von (a) + (b) zugesetzt ist.

56. Thermoplastisches elastomeres Material gemäß mindestens einem der vorhergehenden Ansprüche, wobei das thermoplastische Elastomer auf Styrolbasis (a) konjugierte Dienmonomere einschließt und das thermoplastische elastomere Material im wesentlichen frei ist von einem Radikalstarter (h).

57. Fertigungserzeugnis, erhalten durch Formen eines thermoplastischen elastomeren Materials gemäß mindestens einem der vorhergehenden Ansprüche.

58. Fertigungserzeugnis, das ein thermoplastisches elastomeres Material gemäß mindestens einem der vorhergehenden Ansprüche enthält.

59. Fertigungserzeugnis gemäß Anspruch 57 oder 58, wobei das Fertigungserzeugnis aus Schuhsohlen, Schuh-Plaststreifen zwischen Oberleder und Sohle und Schuh-Innensohlen ausgewählt ist.

60. Fertigungserzeugnis gemäß Anspruch 57 oder 58, wobei das Fertigungserzeugnis aus Gurten; Fußböden und Fußwegen; Fußbodenplatten; Matten; Stoßdämpferverkleidungen; Schallbarrieren; Membranschutzeinrichtungen; Teppichunterlagen; Kfz-Stoßstangen; Radkastenauskleidungen; Dichtungen; o-Ringen; Dichtringen; Bewässerungssystemen; Rohr- oder Schlauchmaterialien; Blumentöpfen; Bausteinen; Dachmaterialien; Geomembranen, ausgewählt ist.

## Revendications

1. Matériau élastomère thermoplastique, comprenant :
a) de 10 à 100 % en poids d'au moins un élastomère thermoplastique à base de styrène ;
b) de 0 à 90 % en poids d'au moins un homopolymère ou copolymère thermoplastique d'α-oléfine, différent du composant (a); le total de ces composants (a) et (b) faisant 100 % ;
c) de 2 à 90 parties en poids d'un caoutchouc vulcanisé, à l'état divisé;
d) et de 0,01 à 10 parties en poids d'au moins un agent de couplage comportant au moins une insaturation éthylénique ;
les quantités des composants (c) et (d) étant données pour 100 parties en poids, au total, des composants (a) et (b).

2. Matériau élastomère thermoplastique conforme à la revendication 1, comprenant :
a) de 20 à 80 % en poids d'au moins un élastomère thermoplastique à base de styrène ;
b) et de 20 à 80 % en poids d'au moins un homopolymère ou copolymère thermoplastique d'α-oléfine, différent du composant (a);
le total de ces composants (a) et (b) faisant 100 %.

3. Matériau élastomère thermoplastique conforme à la revendication 1 ou 2, dans lequel le caoutchouc vulcanisé à l'état divisé (c) se trouve présent en une quantité de 5 à 40 parties en poids pour 100 parties en poids, au total, des composants (a) et (b).

4. Matériau élastomère thermoplastique conforme à l'une des revendications précédentes, dans lequel l'agent de couplage se trouve présent en une quantité de 0,05 à 5 parties en poids pour 100 parties en poids, au total, des composants (a) et (b).

5. Matériau élastomère thermoplastique conforme à l'une des revendications précédentes, dans lequel l'élastomère thermoplastique à base de styrène (a) comporte au moins deux blocs terminaux de type poly(hydrocarbure monovinyl-aromatique) et au moins un bloc interne de type poly(diène conjugué) et/ou poly(α-oléfine aliphatique).

6. Matériau élastomère thermoplastique conforme à la revendication 5, pour lequel l'élastomère thermoplastique à base de styrène (a) est choisi parmi les copolymères à blocs correspondant aux formules suivantes : A(BA)ₘ, A(BA')_{m'}, (AB)ₙX, (AB)ₚX(A'B')_{q} et (AB)ᵣX(B")ₛ, dans lesquelles chacun des symboles A et A' représente indépendamment un bloc polymère comportant des motifs de monomère monovinylidène-aromatique, chacun des symboles B, B' et B" représente indépendamment un bloc polymère comportant des motifs de monomère diène conjugué et/ou de monomère α-oléfine aliphatique, X représente un raccord polyfonctionnel, les indices n et r sont des nombres entiers valant au moins 2, les indices m et m' sont des nombres entiers valant au moins 1, et les indices p, q et s sont des nombres entiers valant au moins 1.

7. Matériau élastomère thermoplastique conforme à la revendication 6, pour lequel le monomère monovinylidène-aromatique des blocs A et A' est choisi parmi les styrène, styrènes à substituant(s) alkyle, styrènes à substituant(s) alcoxy, vinyl-naphtalènes, vinyl-naphtalènes à substituant(s) alkyle, vinyl-xylènes et vinyl-xylènes à substituant(s) alkyle, et les mélanges de tels composés.

8. Matériau élastomère thermoplastique conforme à la revendication 6 ou 7, pour lequel le monomère diène conjugué des blocs B, B' et B" est choisi parmi les diènes conjugués comportant de 4 à 24 atomes de carbone, tels les 1,3-butadiène, isoprène, 2-éthyl-1,3-butadiène, 2,3-diméthyl-1,3-butadiène, 2-phényl-1,3-butadiène, 1,3-pentadiène, méthyl-pentadiène, 3-éthyl-1,3-pentadiène, 2,4-hexadiène, 3,4-diméthyl-1,3-hexadiène, 4,5-di-éthyl-1,3-octadiène et pipérylène, et les mélanges de tels composés.

9. Matériau élastomère thermoplastique conforme à l'une des revendications 6 à 8, pour lequel le monomère α-oléfine aliphatique est choisi parmi l'éthylène, le propylène et leurs mélanges.

10. Matériau élastomère thermoplastique conforme à l'une des revendications 6 à 9, dans lequel le raccord polyfonctionnel comporte de 2 à 8 groupes fonctionnels.

11. Matériau élastomère thermoplastique conforme à l'une des revendications 6 à 10, dans lequel les copolymères à blocs ont été sélectivement hydrogénés.

12. Matériau élastomère thermoplastique conforme à l'une des revendications 6 à 11, dans lequel la masse molaire moyenne en poids des blocs A et A' vaut de 3 000 g/mol à 125 000 g/mol.

13. Matériau élastomère thermoplastique conforme à l'une des revendications 6 à 12, dans lequel la masse molaire moyenne en poids des blocs B, B' et B" vaut de 10 000 g/mol à 300 000 g/mol.

14. Matériau élastomère thermoplastique conforme à l'une des revendications 6 à 13, dans lequel la masse molaire moyenne en poids totale des copolymères à blocs vaut de 25 000 à 500 000.

15. Matériau élastomère thermoplastique conforme à l'une des revendications 6 à 14, dans lequel le copolymère à blocs présente une structure à trois blocs qui peut être de type linéaire ou radial, ou de toute combinaison de ces types.

16. Matériau élastomère thermoplastique conforme à l'une des revendications 6 à 15, pour lequel l'élastomère thermoplastique à base de styrène (a) est choisi parmi les copolymères à trois blocs suivants : styrene-butadiène-styrène (SBS), styrène-isoprène-styrène (SIS), styrène-éthylène/butène-styrène (SEBS), et leurs mélanges.

17. Matériau élastomère thermoplastique conforme à l'une des revendications précédentes, dans lequel, dans l'homopolymère ou copolymère thermoplastique d'α-oléfine (b), différent du composant (a), l'α-oléfine est une α-oléfine aliphatique ou aromatique de formule CH₂=CH-R où R représente un atome d'hydrogène, un groupe alkyle linéaire ou ramifié comportant 1 à 12 atomes de carbone, ou un groupe aryle comportant 6 à 14 atomes de carbone.

18. Matériau élastomère thermoplastique conforme à la revendication 17, pour lequel l'α-oléfine aliphatique est choisie parmi les suivantes : éthylène, propylène, 1-butène, isobutène, 1-pentène, 1-hexène, 3-méthyl-1-butène, 3-méthyl-1-pentène, 4-méthyl-1-pentène, 4-méthyl-1-hexène, 4,4-diméthyl-1-hexène, 4,4-diméthyl-1-pentène, 4-éthyl-1-hexène, 3-éthyl-1-hexéne, 1-octène, 1-décène, 1-dodécène, 1-tétradécène, 1-hexadécène, 1-octadécène, 1-eicosène, et leurs mélanges.

19. Matériau élastomère thermoplastique conforme à la revendication 17, pour lequel l'α-oléfine aromatique est choisie parmi le styrène, l'α-méthyl-styrène et leurs mélanges.

20. Matériau élastomère thermoplastique conforme à l'une des revendications 17 à 19, pour lequel l'homopolymère ou copolymère thermoplastique d'α-oléfine (b) est choisi parmi les suivants :
- les homopolymères de propylène et les copolymères de propylène et d'éthylène et/ou d'α-oléfine en C₄₋₁₂ contenant globalement moins de 10 % en moles d'éthylène et/ou d'α-oléfine ;
- les homopolymères d'éthylène et les copolymères d'éthylène et d'au moins une α-oléfine en C₄₋₁₂, et en option d'au moins un polyène ;
- les polymères de styrène, comme les homopolymères de styrène et les copolymères de styrène et d'au moins un (alkyle en C₁₋₄)-styrène, ou les copolymères formés avec au moins un élastomère naturel ou synthétique, comme un polybutadiène, un polyisoprène, un caoutchouc butyl, un copolymère éthylène/propylène/diène (EPDM), un copolymère éthylène-propylène (EPR), un caoutchouc naturel ou un caoutchouc d'épichlorhydrine ;
- les copolymères d'éthylène et d'au moins un ester à insaturation éthylénique, choisi parmi les acrylates d'alkyle et méthacrylates d'alkyle dont le groupe alkyle, linéaire ou ramifié, comporte 1 à 8 atomes de carbone, et les carboxylates de vinyle dont le groupe carboxylate, linéaire ou ramifié, comporte 2 à 8 atomes de carbone, dans lesquels copolymères l'ester à insaturation éthylénique représente en général de 0,1 à 80 % du poids total du copolymère.

21. Matériau élastomère thermoplastique conforme à la revendication 20, pour lequel les homopolymères d'éthylène et les copolymères d'éthylène et d'au moins une α-oléfine en C₄₋₁₂ sont choisis parmi les polyéthylène basse densité (PEbd), polyéthylène moyenne densité (PEmd), polyéthylène haute densité (PEhd), polyéthylène basse densité linéaire (PEbd1) et polyéthylène ultra-basse densité (PEubd), ainsi que leurs mélanges.

22. Matériau élastomère thermoplastique conforme à la revendication 20, pour lequel les copolymères d'éthylène et d'au moins une α-oléfine en C₄₋₁₂, et en option d'au moins un polyène, sont choisis parmi les suivants
- les copolymères élastomères présentant la composition en monomères suivante : 35 à 90 % en moles d'éthylène, 10 à 65 % en moles d'α-oléfine aliphatique, et 0 à 10 % en moles de polyène ;
- les copolymères présentant la composition en monomères suivante : 75 à 97 % en moles d'éthylène, 3 à 25 % en moles d'α-oléfine aliphatique, et 0 à 5 % en moles de polyène.

23. Matériau élastomère thermoplastique conforme à la revendication 20, dans lequel les polymères de styrène, différents du composant (a), sont les suivants : polystyrène syndiotactique, polystyrène isotactique, polystyrène atactique, copolymère de styrène et de méthyl-styrène, copolymère de styrène et d'isoprène, copolymère de styrène et de butadiène, copolymères à deux blocs styrène-éthylène/propylène (S-EP) ou styrène-éthylène/butène (S-EB), copolymères ramifiés styrène-butadiène ou styrène-isoprène, et leurs mélanges.

24. Matériau thermoplastique conforme à la revendica-tion 20, pour lequel les copolymères d'éthylène et d'au moins un ester à insa-turation éthylénique sont choisis parmi les copolymères d'éthylène et d'acé-tate de vinyle (EVA), d'éthylène et d'acrylate d'éthyle (EEA), ou d'éthylène et d'acrylate de butyle (EBA), et leurs mélanges.

25. Matériau élastomère thermoplastique conforme à l'une des revendications précédentes, dans lequel le caoutchouc vulcanisé à l'état divisé (c) se présente en particules dont la taille ne vaut pas plus de 10 mm.

26. Matériau élastomère thermoplastique conforme à la revendication 25, dans lequel le caoutchouc vulcanisé à l'état divisé (c) se présente en particules dont la taille ne vaut pas plus de 5 mm.

27. Matériau élastomère thermoplastique conforme à l'une des revendications 1 à 24, dans lequel le caoutchouc vulcanisé à l'état divisé (c) se présente en particules dont la taille ne vaut pas plus de 0,5 mm.

28. Matériau élastomère thermoplastique conforme à la revendication 27, dans lequel le caoutchouc vulcanisé à l'état divisé (c) se présente en particules dont la taille ne vaut pas plus de 0,2 mm.

29. Matériau élastomère thermoplastique conforme à la revendication 28, dans lequel le caoutchouc vulcanisé à l'état divisé (c) se présente en particules dont la taille ne vaut pas plus de 0,1 mm.

30. Matériau élastomère thermoplastique conforme à l'une des revendications précédentes, dans lequel le caoutchouc vulcanisé à l'état divisé (c) comprend au moins un polymère ou copolymère élastomère de diène réticulé, d'origine naturelle ou obtenu par polymérisation en solution, en émulsion ou en phase gazeuse d'une ou plusieurs dioléfines à doubles liaisons conjuguées, éventuellement mélangées avec au moins un comonomère choisi parmi les mono-vinyl-arènes et/ou les comonomères polaires, présent en une proportion pondérale d'au plus 60 %.

31. Matériau élastomère thermoplastique conforme à la revendication 30, pour lequel le polymère ou copolymère élastomère de diène réticulé est choisi parmi les suivants : cis-1,4-polyisoprène, 3,4-polyisoprène, polybutadiène, copolymères d'isoprène et d'isobutène, éventuellement halogénés, copolymères de 1,3-butadiène et d'acrylonitrile, copolymères de styrène et de 1,3-butadiène, copolymères de styrène, 1,3-butadiène et acrylonitrile, et copolymères de styrène, isoprène et 1,3-butadiène, ainsi que leurs mélanges.

32. Matériau élastomère thermoplastique conforme à l'une des revendications précédentes, dans lequel le caoutchouc vulcanisé à l'état divisé (c) comprend en outre au moins un polymère élastomère réticulé d'une ou de plusieurs monooléfines et d'un comonomère oléfinique ou d'un dérivé d'un tel comonomère.

33. Matériau élastomère thermoplastique conforme à la revendication 32, pour lequel le copolymère élastomère réticulé est choisi parmi les suivants : copolymères éthylène-propylène (EPR), copolymères éthylène-propylène-diène (EPDM), polyisobutène, caoutchoucs butyl, et caoutchoucs butyl halogénés, en particulier chlorés ou bromés, ainsi que leurs mélanges.

34. Matériau élastomère thermoplastique conforme à l'une des revendications précédentes, pour lequel l'agent de couplage comportant au moins une insaturation éthylénique (d) est choisi parmi les silanes comportant au moins une insaturation éthylénique et au moins un groupe séparable par hydrolyse, les époxydes comportant au moins une insaturation éthylénique, les acides monocarboxyliques ou dicarboxyliques comportant au moins une insaturation éthylénique et leurs dérivés, et les titanates, zirconates ou aluminates organiques comportant au moins une insaturation éthylénique.

35. Matériau élastomère thermoplastique conforme à la revendication 34, pour lequel les silanes sont choisis parmi les γ-méthacryloxypropyltriméthoxysilane, méthyl-triéthoxysilane, méthyl-tris(2-méthoxyéthoxy)silane, diméthyl-diméthoxysilane, vinyl-tris(2-méthoxyéthoxy)silane, vinyltriméthoxysilane, vinyl-triéthoxysilane, octyl-triéthoxysilane, isobutyl-triéthoxysilane et isobutyl-triméthoxysilane, ainsi que leurs mélanges.

36. Matériau élastomère thermoplastique conforme à la revendication 34, pour lequel les époxydes sont choisis parmi les suivants : acrylate de glycidyle, méthacrylate de glycidyle, ester monoglycidylique d'acide itaconique, ester glycidylique d'acide maléique, vinyl-glycidyl-éther et allyl-glycidyl-éther, ainsi que leurs mélanges.

37. Matériau élastomère thermoplastique conforme à la revendication 34, pour lequel les acides monocarboxyliques ou dicarboxyliques et leurs dérivés sont choisis parmi les suivants : acide maléique, anhydride ma-léique, acide fumarique, acide citraconique, acide itaconique, acide acryli-que, acide méthacrylique, et leurs dérivés de type ester ou anhydride, ainsi que les mélanges de ces composés.

38. Matériau élastomère thermoplastique conforme à l'une des revendications précédentes, qui comporte en outre, en tant que composant (e), au moins un acide aromatique monocarboxylique ou dicarboxylique ou un dérivé d'un tel acide, comme un anhydride ou un ester.

39. Matériau élastomère thermoplastique conforme à la revendication 38, pour lequel l'acide aromatique monocarboxylique ou dicarboxylique ou le dérivé d'un tel acide est choisi parmi les suivants : acide benzoïque, acide phtalique, anhydride phtalique, anhydride trimellique, phtalate de di-2-éthyl-hexyle, phtalate de di-isodécyle et trimellate de tri-2-éthyl-hexyle, ainsi que leurs mélanges.

40. Matériau élastomère thermoplastique conforme à la revendication 38 ou 39, dans lequel l'acide aromatique monocarboxylique ou dicarboxylique ou le dérivé d'un tel acide, c'est-à-dire le composant (e), se trouve présent en une quantité de 0 à 10 parties en poids, pour 100 parties en poids, au total, des composants (a) et (b).

41. Matériau élastomère thermoplastique conforme à la revendication 40, dans lequel l'acide aromatique monocarboxylique ou dicarboxylique ou le dérivé d'un tel acide, c'est-à-dire le composant (e), se trouve présent en une quantité de 0,01 à 5 parties en poids, pour 100 parties en poids, au total, des composants (a) et (b).

42. Matériau élastomère thermoplastique conforme à l'une des revendications précédentes, qui comporte en outre, en tant que composant (f), au moins une charge inorganique.

43. Matériau élastomère thermoplastique conforme à la revendication 42, pour lequel la charge inorganique (f) est choisie parmi les hydroxydes, oxydes hydratés, sels et sels hydratés de métaux, en particulier de calcium, de magnésium ou d'aluminium, éventuellement mélangés avec d'autres charges inorganiques comme des silicates, du noir de carbone, ainsi que les mélanges de telles charges.

44. Matériau élastomère thermoplastique conforme à la revendication 43, dans lequel la charge inorganique est de l'hydroxyde de magnésium, de l'hydroxyde d'aluminium, de l'oxyde d'aluminium, de l'oxyde d'aluminium trihydraté, du carbonate de magnésium hydraté, du carbonate de magnésium, du carbonate de calcium hydraté, du carbonate de calcium, du carbonate de magnésium et de calcium hydraté, du carbonate de magnésium et de calcium, ou un mélange de ces composés.

45. Matériau élastomère thermoplastique conforme à l'une des revendications 42 à 44, dans lequel la charge inorganique (f) se trouve présente en une quantité de 0 à 200 parties en poids, pour 100 parties en poids, au total, des composants (a) et (b).

46. Matériau élastomère thermoplastique conforme à la revendication 45, dans lequel la charge inorganique (f) se trouve présente en une quantité de 10 à 50 parties en poids, pour 100 parties en poids, au total, des composants (a) et (b).

47. Matériau élastomère thermoplastique conforme à l'une des revendications précédentes, qui comporte en outre, en tant que composant (g), au moins un 1,2-polybutadiène syndiotactique.

48. Matériau élastomère thermoplastique conforme à la revendication 47, dans lequel le 1,2-polybutadiène syndiotactique présente une masse molaire moyenne en nombre de 75 000 à 200 000.

49. Matériau élastomère thermoplastique conforme à la revendication 47 ou 48, dans lequel le 1,2-polybutadiène présente un taux de cristallinité de 10 à 90 %.

50. Matériau élastomère thermoplastique conforme à l'une des revendications 47 à 49, dans lequel le 1,2-polybutadiène syndiotactique (g) se trouve présent en une quantité de 0 à 300 parties en poids, pour 100 parties en poids, au total, des composants (a) et (b).

51. Matériau élastomère thermoplastique conforme à la revendication 50, dans lequel le 1,2-polybutadiène syndiotactique (g) se trouve présent en une quantité de 5 à 200 parties en poids, pour 100 parties en poids, au total, des composants (a) et (b).

52. Matériau élastomère thermoplastique conforme à l'une des revendications précédentes, qui comporte en outre, en tant que composant (h), un amorceur radicalaire.

53. Matériau élastomère thermoplastique conforme à la revendication 52, pour lequel l'amorceur radicalaire (h) est choisi parmi les peroxydes organiques comme du perbenzoate de t-butyle, du peroxyde de dicumyle, du peroxyde de benzoyle, du peroxyde de di-tertiobutyle, ou un mélange de tels composés.

54. Matériau élastomère thermoplastique conforme à la revendication 52 ou 53, dans lequel l'amorceur radicalaire (h) se trouve ajouté en une quantité de 0 à 5 parties en poids, pour 100 parties en poids, au total, des composants (a) et (b).

55. Matériau élastomère thermoplastique conforme à la revendication 54, dans lequel l'amorceur radicalaire (h) se trouve ajouté en une quan-tité de 0,01 à 2 parties en poids, pour 100 parties en poids, au total, des composants (a) et (b).

56. Matériau élastomère thermoplastique conforme à l'une des revendications précédentes, dans lequel l'élastomère thermoplastique à base de styrène (a) comprend des motifs de monomère diène conjugué, et lequel matériau élastomère thermoplastique est pratiquement dépourvu d'amorceur radicalaire (h).

57. Produit manufacturé, obtenu par moulage d'un matériau élastomère thermoplastique conforme à l'une des revendications précédentes.

58. Produit manufacturé, comprenant un matériau élastomère thermoplastique conforme à l'une des revendications précédentes.

59. Produit manufacturé, conforme à la revendication 57 ou 58, lequel produit manufacturé est choisi parmi les suivants : semelles de chaussure, talonnettes de chaussure et semelles premières de chaussure.

60. Produit manufacturé, conforme à la revendication 57 ou 58, lequel produit manufacturé est choisi parmi les suivants : ceintures, revêtements de sol, tapis de marche, dalles de revêtement de sol, tapis de sport, plaques d'amortissement de chocs, barrières anti-bruit, protections de membranes, thibaudes, pare-chocs d'automobile, doublures de passage de roue, joints d'étanchéité, joints toriques, joints statiques, systèmes d'arrosage et d'irrigation, éléments de tuyaux ou de canalisations, pots de fleurs, blocs pour le bâtiment, éléments de toiture, et géomembranes.
